# EUROPEAN PATENT APPLICATION

(11) **EP 3 889 879 A1**
(43) Date of publication of application: **06.10.2021**
(21) Application number: 21166136.8
(22) Date of filing: 31.03.2021
(51) Int. Cl.: G06Q 50/30, G06Q 20/36, G06Q 30/06

(54) **PARKING LOT PROVISION SYSTEM, SERVER DEVICE, AND NON-TRANSITORY STORAGE MEDIUM**

(30) Priority: 02.04.2020 JP 2020066444
(71) Applicant: TOYOTA JIDOSHA KABUSHIKI KAISHA, TOYOTA-SHI, AICHI-KEN 471-8571 (JP)
(72) Inventor: TAKAHASHI, Yoshihiko, TOYOTA-SHI, AICHI-KEN, 471-8571 (JP); TATSUMOTO, Yuki, TOYOTA-SHI, AICHI-KEN, 471-8571 (JP); NISHINAKA, Keisuke, TOYOTA-SHI, AICHI-KEN, 471-8571 (JP); TAMURA, Hiroki, TOYOTA-SHI, AICHI-KEN, 471-8571 (JP); NISHIKAWA, Yoshitaka, TOYOTA-SHI, AICHI-KEN, 471-8571 (JP); GOTOH, Kenji, TOYOTA-SHI, AICHI-KEN, 471-8571 (JP); KATO, Kota, TOYOTA-SHI, AICHI-KEN, 471-8571 (JP)
(74) Representative: Cabinet Beau de Loménie

(57) **Abstract**

A parking lot provision system includes a vehicle (40) including a first processor having hardware, the first processor being configured to calculate a safe driving degree of the vehicle (40) by a driver, and output information related to the safe driving degree which is calculated; and a server device (10) including a second processor having hardware, the second processor being configured to acquire the information related to the safe driving degree, and determine, based on the information which is acquired, whether to provide a parking lot provision service for renting a parking lot to the driver.

## Description

### BACKGROUND OF THE INVENTION

### 1. Field of the Invention

The present disclosure relates to a parking lot provision system, a server device, and a non-transitory storage medium.

### 2. Description of Related Art

Japanese Unexamined Patent Application Publication No. 2017-130029 (JP 2017-130029 A) describes a parking lot system for renting a vacant parking space by the hour.

### SUMMARY OF THE INVENTION

The owner of a parking lot may not want to provide the parking lot to a user who rents the parking lot, depending on the driving skills of the user or the size of the vehicle. Therefore, it is expected to provide a technique of selecting a user to whom to provide access to a parking lot or to whom to rent a parking lot.

The present disclosure provides a parking lot provision system, a server device, and a non-transitory storage medium that can select a user to whom to provide access to a parking lot or to whom to rent a parking lot.

A server device according to a first aspect of the present disclosure includes a first processor configured to acquire information related to a safe driving degree of a driver of a vehicle; and determine, based on the information which is acquired, whether to provide access to a parking lot to the driver.

Herein, providing access to a parking lot to the driver means providing access to a parking lot to a vehicle driven by the driver.

A server device according to another aspect of the present disclosure includes a first processor being configured to: acquire information related to a safe driving degree of a driver of a vehicle; and determine, based on the information which is acquired, whether to provide a parking lot provision service for renting a parking lot to the driver. The safe driving degree is a level of safety when the driver drives the vehicle.

A parking lot provision system according to a second aspect of the present disclosure includes: a server device according to the first aspect of the present disclosure, and a vehicle including a second processor having hardware, the second processor being configured to calculate a safe driving degree of the vehicle by a driver, and output information related to the safe driving degree which is calculated.

A non-transitory storage medium according to a third aspect of the present disclosure stores a program that is executable by one or more processors and that causes the one or more processors to perform functions including: acquiring information related to a safe driving degree of a driver of a vehicle; and determining, based on the acquired information, whether to provide access to a parking lot to the driver.

A non-transitory storage medium according to a fourth aspect of the present disclosure stores a program that is executable by one or more processors having hardware and that causes the one or more processors to perform functions including: acquiring information related to a safe driving degree of a driver of a vehicle; and determining, based on the acquired information, whether to provide a parking lot provision service for renting a parking lot to the driver.

With the present disclosure, it is possible to provide a parking lot provision system, a server device, and a non-transitory storage medium that can select a user to whom to give access or to rent a parking lot.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating the configuration of a wallet system according to an embodiment of the present disclosure;
FIG. 2 is a block diagram illustrating the configuration of a wallet server illustrated in FIG. 1;
FIG. 3 is a block diagram illustrating the configuration of a settlement operator server illustrated in FIG. 1;
FIG. 4 is a block diagram illustrating the configuration of a user terminal illustrated in FIG. 1;
FIG. 5 illustrates the relationship between a wallet and a settlement method;
FIG. 6 is a block diagram illustrating the configuration of a vehicle illustrated in FIG. 1;
FIG. 7 is a timing chart illustrating the flow of a service management process according to an embodiment of the present disclosure; and
FIG. 8 illustrates an example of a display screen of a parking lot position.

### DETAILED DESCRIPTION OF EMBODIMENTS

A wallet system according to an embodiment of the present disclosure will be described below with reference to the drawings.

### Configuration

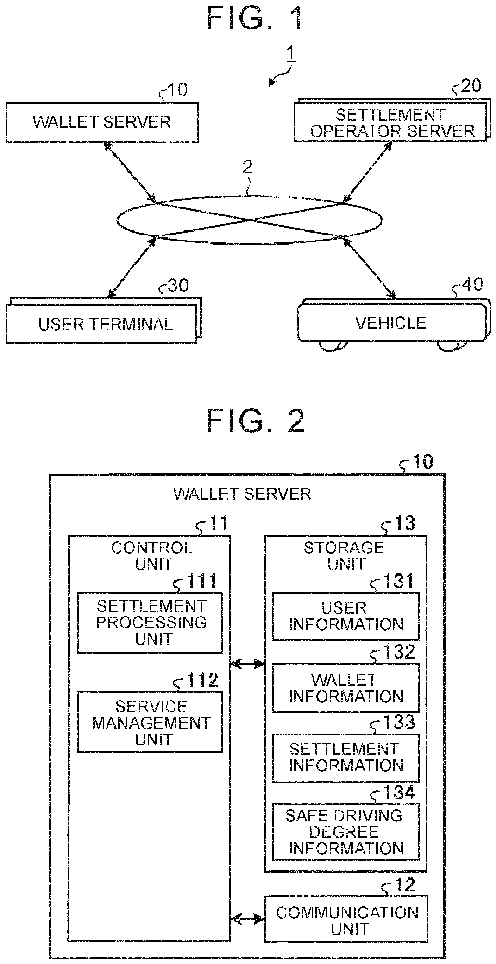

First, the configuration of a wallet system according to an embodiment of the present disclosure will be described with reference to FIGS. 1 to 6.

As illustrated in FIG. 1, a wallet system 1 according to the embodiment of the present disclosure includes a wallet server 10, a settlement operator server 20, a user terminal 30, and a vehicle 40, which can communicate information with each other via a network 2.

The network 2 is constituted of an Internet line network, a cellular phone line network, etc. The network 2 may be a public communication network such as the Internet, for example, and may include other communication networks such as a wide area network (WAN), a telephone communication network for cellular phones etc., a radio communication network such as Wi-Fi (registered trademark), etc.

The wallet server 10 is an information processing device that integrally manages the wallet system 1, and is managed by a manager of the wallet system 1. As illustrated in FIG. 2, the wallet server 10 includes a control unit 11, a communication unit 12, and a storage unit 13.

The control unit 11 includes a processor having hardware such as a central processing unit (CPU), a digital signal processor (DSP), and a field-programmable gate array (FPGA), and a main storage unit such as a random access memory (RAM) and a read only memory (ROM). The control unit 11 achieves a function that matches a predetermined purpose by loading a computer program stored in the storage unit 13 into a work area of the main storage unit, executing the computer program, and controlling the various constituent units etc. through execution of the computer program. In the present embodiment, the control unit 11 functions as a settlement processing unit 111 and a service management unit 112 by executing the computer program. The functions of the settlement processing unit 111 and the service management unit 112 will be discussed later.

The communication unit 12 is constituted of a local area network (LAN) interface board, a radio communication circuit for radio communication, etc., for example. The LAN interface board or the radio communication circuit is connected to the network 2 such as the Internet which is a public communication network. The communication unit 12 is connected to the network 2, and communicates information with the settlement operator server 20, the user terminal 30, and the vehicle 40 via the network 2.

The storage unit 13 is constituted of a recording medium such as an erasable programmable ROM (EPROM), a hard disk drive (HDD), and a removable medium. Examples of the removable medium include a universal serial bus (USB) memory and a disk recording medium such as a Compact Disc (CD), a Digital Versatile Disc (DVD), and a Blu-ray (registered trademark) Disc (BD). The storage unit 13 can store an operating system (OS), various programs, various tables, various databases, etc. In the present embodiment, the storage unit 13 stores user information 131, wallet information 132, settlement information 133, and safe driving degree information 134 for each user who uses the wallet system 1.

The user information 131 is information related to the user who uses the wallet system 1. Examples of the user information 131 include a user identification (ID) of a user who has registered to use the wallet system 1, a password, the name of the user, contact information (e.g. address, telephone number, e-mail address, etc.) of the user, a use registration history, information related to payment means registered as deposit means, information on payment means registered as settlement means, a code number for settlement, and information (such as position and parking fee) related to a parking lot that can be provided to the user through a parking lot provision service. Of the user information 131, the user ID and the password are used for an authentication process for logging in to the wallet server 10, etc.

The wallet information 132 is information related to a wallet of the wallet system 1. The wallet indicates a virtual account for depositing and withdrawing electronic money. Examples of the wallet information 132 include a user ID, the balance of electronic money, a deposit history of electronic money, and a use history of electronic money.

The settlement information 133 is information related to settlement with the wallet system 1. Examples of the settlement information 133 include a user ID, settlement means (e.g. electronic money payment (contactless settlement), scan payment, code payment, etc.) used for settlement, and a settlement history.

The safe driving degree information 134 is information related to the safe driving degree of the vehicle 40 of the user who uses the wallet system 1. The safe driving degree indicates the degree of safe driving of the vehicle 40, that is, the capacity of the driver to drive the vehicle 40 safely. As the safe driving degree is higher, it is more likely that the user drives the vehicle 40 safely. The safe driving degree information 134 includes information on the vehicle 40 which is owned by the user and information related to the safe driving degree of the user.

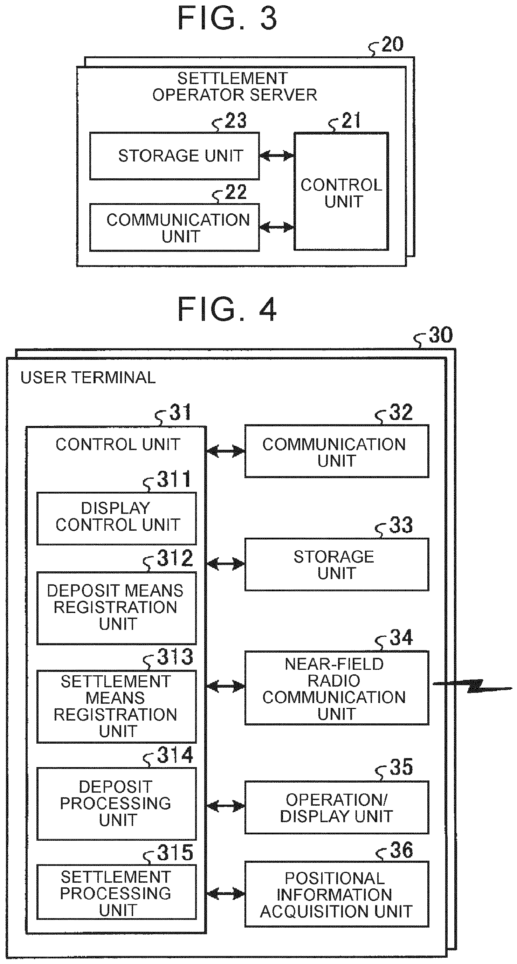

The settlement operator server 20 is a server that manages an account and a credit card of the user, and is provided in a financial institution (e.g. a bank, a credit association, a credit union, a labor credit association, etc.) and a credit card company. As illustrated in FIG. 3, the settlement operator server 20 includes a control unit 21, a communication unit 22, and a storage unit 23. The control unit 21, the communication unit 22, and the storage unit 23 are physically configured similarly to the control unit 11, the communication unit 12, and the storage unit 13, respectively.

The storage unit 23 stores account information and credit card information on each user that uses the wallet system 1. Examples of the account information include the name of the user, the account number, the account balance, and a deposit/withdrawal history. Examples of the credit card information include the name of the user, the credit card number, the expiration date of the credit card, the credit limit, and a card use history.

The user terminal 30 is a computer terminal that is used by the user. Examples of the user terminal 30 include a smartphone owned by the user, a cellular phone, a tablet terminal, a wearable computer, a personal computer, and a route guide device mounted on a vehicle. The user terminal 30 may be any terminal that can communicate information with the wallet server 10.

As illustrated in FIG. 4, the user terminal 30 includes a control unit 31, a communication unit 32, a storage unit 33, a near-field radio communication unit 34, an operation/display unit 35, and a positional information acquisition unit 36. The control unit 31, the communication unit 32, and the storage unit 33 are physically configured similarly to the control unit 11, the communication unit 12, and the storage unit 13, respectively. The control unit 31 functions as a display control unit 311, a deposit means registration unit 312, a settlement means registration unit 313, a deposit processing unit 314, and a settlement processing unit 315 through execution of a computer program.

The display control unit 311 controls the content of display on the operation/display unit 35. The display control unit 311 causes the operation/display unit 35 to display, based on an operation (such as a touch operation and a flick operation) by the user, a membership registration screen that allows the user to register as a member, a log-in screen for logging in to the wallet server 10, a deposit screen for depositing electronic money into a wallet, a settlement screen for making a settlement, a use history screen that shows a use history such as settlements, a payment history detail screen showing the details of a payment history, a code payment screen, a scan payment screen, etc. The display control unit 311 also makes a transition between screens based on an operation by the user. A variety of configurations can be adopted as the screen configuration of the settlement screen, the use history screen, the payment history detail screen, and the code payment screen.

The deposit means registration unit 312 registers deposit means for depositing electronic money. Specifically, the deposit means registration unit 312 transmits, to the wallet server 10, a deposit means registration request for registering a plurality of different payment means (e.g. a bank account, a credit card, a virtual credit card, etc.) operated by a plurality of operators as deposit means for depositing electronic money into a wallet. Upon receiving the deposit means registration request from the deposit means registration unit 312, the control unit 11 of the wallet server 10 registers the payment means included in the deposit means registration request as deposit means by storing such payment means in the storage unit 13 as the user information 131.

The deposit means registration unit 312 registers payment means registered as settlement means also as deposit means. That is, when a settlement means registration request is transmitted from the settlement means registration unit 313 to the wallet server 10, the deposit means registration unit 312 transmits, to the wallet server 10, a deposit means registration request for registering payment means included in the settlement means registration request as settlement means. Upon receiving the deposit means registration request from the deposit means registration unit 312, the control unit 11 of the wallet server 10 registers the payment means included in the deposit means registration request as deposit means by storing such payment means in the storage unit 13 as the user information 131.

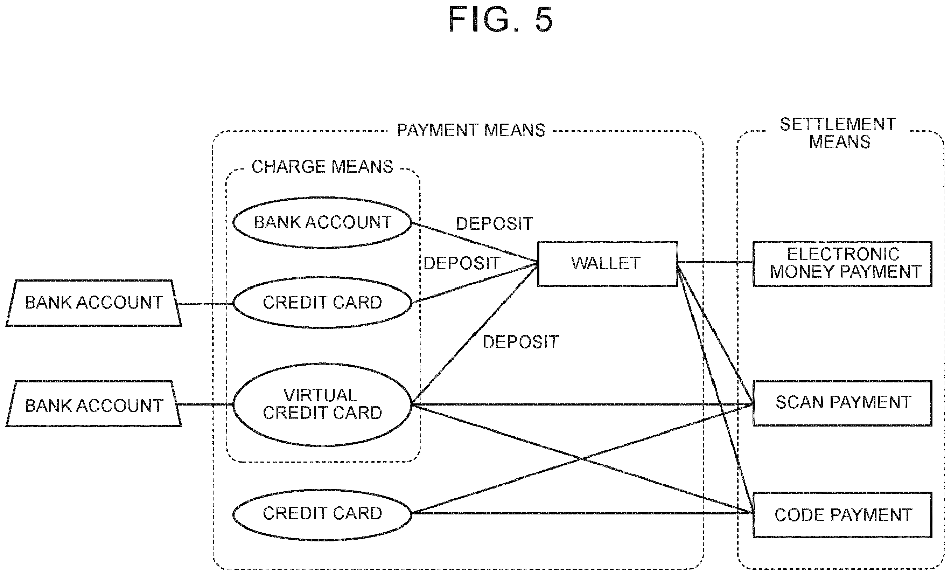

FIG. 5 schematically illustrates the relationship among the payment means, the deposit means, and the settlement means. The "payment means" indicates means as a source of payment (funding source) for making a settlement. The payment means includes a bank account, a credit card, a virtual credit card, and the balance of electronic money in a wallet. The virtual credit card is an intangible credit card, and is constituted of information such as a card number, the expiration date, and an authentication number (security code). The credit card and the virtual credit card are linked with a bank account so that the amount of use of each card is withdrawn from the bank account on a later date.

The "deposit means" indicates means for depositing electronic money into a wallet which is a virtual account for deposit and withdrawal. The deposit means includes a bank account, a credit card, and a virtual credit card, among the payment means. Electronic money can be deposited into a wallet by registering a bank account, a credit card, and a virtual credit card as the deposit means.

The "settlement means" indicates a method of making a settlement using the payment means. Examples of the settlement means include electronic money payment, scan payment, and code payment. The electronic money payment is a settlement made in a contactless manner between the near-field radio communication unit 34 of the user terminal 30 and a near-field radio communication unit 46 of the vehicle 40, by placing the user terminal 30 at a predetermined position of the vehicle 40. The scan payment is a settlement made by reading a barcode or a quick response (QR) code (registered trademark) displayed on the vehicle 40 using a camera etc. of the user terminal 30. The code payment is a settlement made by reading a barcode or a QR code (registered trademark) displayed on the user terminal 30 using a code reader etc. of the vehicle 40.

With the wallet system 1, all of the three types of settlement means can be used using three types of payment means. That is, with the wallet system 1, the payment means and the settlement means can be combined as described in (1) to (3) below.

(1) Electronic money payment, scan payment, and code payment made using the balance of electronic money in a wallet. (2) Electronic money payment, scan payment, and code payment made using a virtual credit card. (3) Electronic money payment, scan payment, and code payment made using a bank account.

In the wallet system 1 according to the present embodiment, electronic money can be deposited into a wallet through the plurality of payment means, and a settlement can be made using the balance of electronic money deposited into the wallet through the plurality of settlement means.

The description returns to FIG. 4. The settlement means registration unit 313 registers payment means registered as deposit means also as settlement means. That is, when a deposit means registration request is transmitted from the deposit means registration unit 312 to the wallet server 10, the settlement means registration unit 313 transmits, to the wallet server 10, a settlement means registration request for registering payment means included in the deposit means registration request as settlement means.

For example, when certain payment means (bank account at A bank) is registered as deposit means, the settlement means registration unit 313 automatically registers this payment means (bank account at A bank) also as settlement means. To "register payment means as settlement means" means to enable the payment means to be used as a source of payment for settlement, and means to enable electronic money payment, scan payment, and code payment using the bank account at A bank as a source of payment, for example. Upon receiving the settlement means registration request from the settlement means registration unit 313, the control unit 11 of the wallet server 10 registers the payment means included in the settlement means registration request as settlement means by storing such payment means in the storage unit 13 as the user information 131.

The deposit processing unit 314 deposits electronic money into a wallet. Specifically, the deposit processing unit 314 transmits, to the wallet server 10, a deposit request for depositing electronic money into a wallet using payment means registered as deposit means. Upon receiving the deposit request from the deposit processing unit 314, the control unit 11 of the wallet server 10 increases the balance of electronic money in the wallet based on deposit amount information included in the deposit request. That is, the control unit 11 updates the wallet information 132 stored in the storage unit 13 in accordance with the amount of increase in the balance of electronic money in the wallet.

The settlement processing unit 315 makes a settlement using payment means. The settlement processing unit 315 transmits, to the vehicle 40 on which the user rides, a settlement request for making a settlement using any of a plurality of settlement means (electronic money payment, scan payment, and code payment) set in advance using electronic money deposited in the wallet. For example, in the case where electronic money payment is to be made, the settlement processing unit 315 transmits a settlement request to the vehicle 40 through the near-field radio communication unit 34. In the case where scan payment is to be made, the settlement processing unit 315 transmits a settlement request to the vehicle 40 by reading a barcode or a QR code (registered trademark) displayed on the vehicle 40 using a camera etc. of the user terminal 30. In the case where code payment is to be made, the settlement processing unit 315 transmits a settlement request to the vehicle 40 by causing a code reader etc. of the vehicle 40 to read a barcode or a QR code (registered trademark) displayed on the user terminal 30. The settlement request which is transmitted from the settlement processing unit 315 to the vehicle 40 may include, or may not include, information that indicates a settlement amount (hereinafter referred to as "settlement amount information").

Subsequently, the control unit 41 of the vehicle 40 transmits a settlement request, which includes the settlement amount information, to the wallet server 10 via the network 2. Upon receiving the settlement request from the vehicle 40, the settlement processing unit 111 of the wallet server 10 decreases the balance of electronic money in the wallet based on the settlement amount information which is included in the settlement request. That is, the settlement processing unit 111 updates the wallet information 132 and the settlement information 133 which are stored in the storage unit 13 in accordance with the amount of decrease in the balance of electronic money in the wallet.

The settlement processing unit 315 can make a settlement using payment means other than the balance of electronic money in the wallet (e.g. a bank account or a credit card). In this case, the settlement processing unit 315 transmits, to the wallet server 10, a settlement request for making a settlement using any of the plurality of settlement means using a bank account or a credit card. Upon receiving the settlement request from the settlement processing unit 315, the settlement processing unit 111 of the wallet server 10 transmits the settlement amount information which is included in the settlement request to the settlement operator server 20.

The storage unit 33 stores data on various screens to be displayed on the operation/display unit 35 by the display control unit 311. In addition, the storage unit 33 continuously or temporarily stores the user information 131, the wallet information 132, the settlement information 133, etc., as necessary.

The near-field radio communication unit 34 has a communication function that conforms to a standard such as Near Field Communication (NFC), Bluetooth (registered trademark) Low Energy (BLE), or Infrared Data Association (IrDA). The user terminal 30 performs near-field radio communication with the vehicle 40 through the near-field radio communication units 34 and 46 when electronic money payment is to be made, for example.

The operation/display unit 35 is constituted of a touch panel display, for example, and has an input function to receive an operation performed using a finger of the user, a pen, etc., and a display function to display various information based on control by the display control unit 311.

The positional information acquisition unit 36 detects the position of the user terminal 30 by receiving radio waves from a Global Positioning System (GPS) satellite, for example. Information related to the position of the user terminal 30 which is detected by the positional information acquisition unit 36 is stored in the storage unit 33.

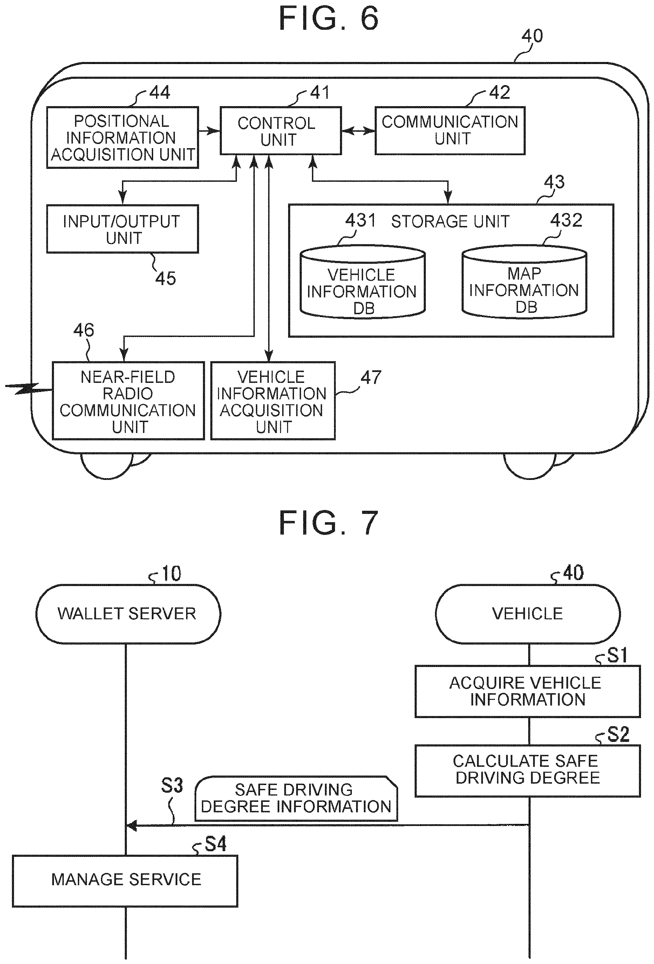

The vehicle 40 is a vehicle driven by a driver to travel, or an automated travel vehicle configured to travel autonomously in accordance with a given travel instruction. As illustrated in FIG. 6, the vehicle 40 includes a control unit 41, a communication unit 42, a storage unit 43, a positional information acquisition unit 44, an input/output unit 45, the near-field radio communication unit 46, and a vehicle information acquisition unit 47.

The control unit 41, the communication unit 42, the storage unit 43, and the near-field radio communication unit 46 are physically configured similarly to the control unit 11, the communication unit 12, the storage unit 13, and the near-field radio communication unit 34, respectively.

The control unit 41 integrally controls operation of various constituent elements mounted on the vehicle 40.

The communication unit 42 is constituted of a Data Communication Module (DCM) etc. that communicates information with the wallet server 10 through radio communication via the network 2.

The storage unit 43 includes a vehicle information database (vehicle information DB) 431 and a map information database (map information DB) 432. The vehicle information DB 431 stores various information including the user ID of the driver of the vehicle 40, vehicle information acquired by the vehicle information acquisition unit 47, etc. in an updatable manner.

The map information DB 432 stores map information. The map information refers to information that is necessary to specify the positions of roads, road structures, facilities, etc. Examples of the map information include data related to nodes set on roads (e.g. node ID, coordinates, etc.), data related to links set on roads (e.g. link ID, link name, connected node ID, road coordinates, road type (such as toll road and general road), number of lanes, etc.), and feature data (e.g. traffic lights, road signs, guardrails, facilities, etc.).

The positional information acquisition unit 44 is physically configured similarly to the positional information acquisition unit 36. Positional information on the vehicle 40 detected by the positional information acquisition unit 44 is stored in the vehicle information DB 431 in a searchable manner. A combination of Light Detection and Ranging or Laser Imaging Detection and Ranging (LiDAR) and a three-dimensional digital map may be adopted as a method of detecting the position of the vehicle 40.

The input/output unit 45 is constituted of a touch panel display, a speaker microphone, etc. The input/output unit 45 as output means is configured to indicate predetermined information to the outside by displaying a character, a figure, etc. on the screen of the touch panel display or outputting a voice from the speaker microphone in accordance with control by the control unit 41. The input/output unit 45 as input means is configured to input predetermined information to the control unit 41 by the user etc. operating the touch panel display or uttering a voice toward the speaker microphone. In the present embodiment, the vehicle 40 includes the positional information acquisition unit 44 and the input/output unit 45 as separate functions. However, the vehicle 40 may include an in-vehicle navigation system with a communication function, which includes both the functions of the positional information acquisition unit 44 and the input/output unit 45, in place of the positional information acquisition unit 44 and the input/output unit 45.

The near-field radio communication unit 46 has a communication function that conforms to a standard such as NFC, BLE, or IrDA, for example, and is provided at a predetermined position in the vehicle 40. Near-field radio communication is executed with the user terminal 30 through the near-field radio communication unit 46 by placing the user terminal 30 at a predetermined position when electronic money payment is to be made, for example.

The vehicle information acquisition unit 47 acquires vehicle information from the vehicle 40 when the vehicle 40 is traveling, and stores the acquired vehicle information in the vehicle information DB 431 via the control unit 41. The vehicle information includes information such as a vehicle ID of the vehicle 40, the vehicle speed, abrupt deceleration, abrupt acceleration, abrupt steering, the operating state of safety devices (such as anti-lock brake system (ABS), tire slip prevention device, and skid prevention device), the steering variation amount, the brake operation variation amount, the accelerator operation variation amount, etc.

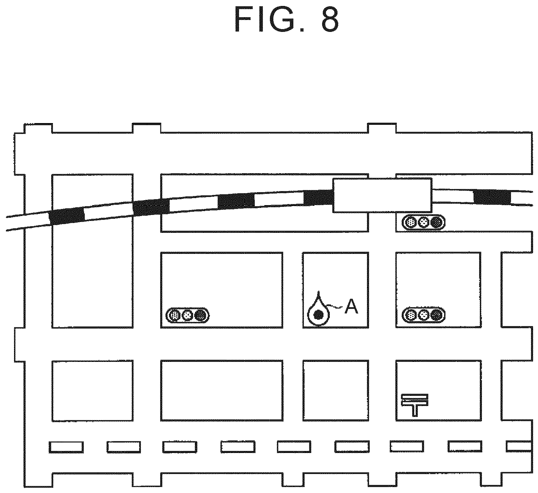

The wallet system 1 configured as described above can select a user to rent a parking lot by executing a service management process described below. Operation of the wallet system 1 performed during execution of the service management process will be described below with reference to FIGS. 7 and 8.

### Service Management Process

FIG. 7 is a timing chart illustrating the flow of the service management process according to the embodiment of the present disclosure. The timing chart illustrated in FIG. 7 is started at the timing when an ignition switch of the vehicle 40 is switched from the off state to the on state, and the service management process proceeds to the process in step S1.

In the process in step S 1, the vehicle information acquisition unit 47 of the vehicle 40 acquires vehicle information, and stores the acquired vehicle information in the vehicle information DB 431 via the control unit 41. Consequently, the process in step S1 is completed, and the service management process proceeds to the process in step S2.

In the process in step S2, the control unit 41 of the vehicle 40 reads the vehicle information from the vehicle information DB 431, and calculates the safe driving degree of the driver of the vehicle 40 using the read vehicle information. The safe driving degree is calculated based on information included in the vehicle information. It may be calculated based on at least one of information relative to how the vehicle 40 is driven and/or has been driven by the driver, the vehicle speed, abrupt deceleration, abrupt acceleration, abrupt steering, and the operating state of safety devices, for example. The safe driving degree is calculated to be low when the user travels at a speed that exceeds the legal speed or decelerates abruptly, for example. Consequently, the process in step S2 is completed, and the service management process proceeds to the process in step S3.

In the process in step S3, the control unit 41 of the vehicle 40 transmits safe driving degree information including the information related to the safe driving degree calculated in the process in step S2, information that specifies the vehicle 40 which is owned by the driver, and information that specifies the driver of the vehicle 40 to the wallet server 10 via the communication unit 42. Consequently, the process in step S3 is completed, and the service management process proceeds to the process in step S4.

In the process in step S4, the control unit 11 of the wallet server 10 receives the safe driving degree information via the communication unit 12, and determines, based on the received safe driving degree information, whether the driver can rent a parking lot. Specifically, the control unit 11 calculates a score of the driver using the safe driving degree, and determines that the driver can rent a parking lot in the case where the calculated score is equal to or higher than a predetermined value. In the case where it is determined that the driver can rent a parking lot, the control unit 11 displays the position of a parking lot that can be rented using an icon A on a map screen provided by the parking lot provision service as illustrated in FIG. 8 using the user information 131. After that, the wallet server 10 executes a settlement process of settling a cost (such as a parking fee) required for the parking lot provision service with the user terminal 30 which is carried by the driver who uses the parking lot provision service via a settlement application program. It is desirable that the predetermined value which is used for determination should be set by the owner of the parking lot. A user who has a parking lot for rent may select to rent the parking lot when the score is equal to or higher than the predetermined value. Further, information provided from the owner of the parking lot, such as the size of the parking lot, an image of the surroundings of the parking lot, and cautions to be taken when parking (such as the presence of a plant pot), may be provided together with the information on the position of the parking lot. Consequently, the process in step S4 is completed, and a sequence of the service management process is finished.

With the service management process according to the present disclosure, as is clear from the above description, the vehicle 40 calculates the safe driving degree of the vehicle 40 by the driver and outputs information related to the calculated safe driving degree, and the wallet server 10 acquires the information related to the safe driving degree and determines, based on the acquired information, whether to provide the parking lot provision service to the driver. Thus, it is possible to select a user to rent a parking lot.

Further effects and modifications can be easily derived by a person skilled in the art. More extensive aspects of the present disclosure are not limited to the specific detailed and representative embodiment indicated and described above.

## Claims

1. A server device (10) comprising a first processor configured to:
acquire information related to a safe driving degree of a driver of a vehicle (40); and
determine, based on the information which is acquired, whether to provide access to a parking lot to the driver.

2. The server device (10) according to claim 1, wherein the first processor is configured to:
calculate a score of the driver based on the safe driving degree; and
provide access to the parking lot when the score which is calculated is equal to or higher than a predetermined value.

3. The server device (10) according to claim 2, wherein the predetermined value is a value set by an owner of the parking lot.

4. The server device (10) according to any one of claims 1 to 3, wherein the first processor is configured to provide the driver with access to the parking lot by outputting, onto a map screen, information related to a position of a parking lot that is allowed to be accessed.

5. The server device (10) according to claim 4, wherein the first processor is configured to output, together with the information related to the position of the parking lot, information related to a size of the parking lot, an image of surroundings of the parking lot, and a caution to be taken when parking.

6. The server device (10) according to any one of claims 1 to 5, wherein the first processor is configured to:
acquire information related to the safe driving degree of a regular user or an owner of the parking lot; and
determine, based on the information related to the safe driving degree of the regular user or the owner of the parking lot, whether to provide access to the parking lot.

7. The server device (10) according to any one of claims 1 to 6, wherein the first processor is configured to execute a settlement process of settling a cost of accessing the parking lot.

8. The server device (10) according to claim 7, wherein the first processor is configured to execute the settlement process in accordance with a settlement application program.

9. The server device according to any of claims 1 to 8, wherein the safe driving degree indicates the degree of safe driving of the vehicle.

10. The server device according to any of claim 1 to 9, wherein the first processor is configured to determine, based on the acquired information, whether to provide a parking lot provision service for renting the parking lot to the driver, wherein the parking lot provision service for renting the parking lot includes providing access to the parking lot.

11. A parking lot provision system (1) comprising:
a server device (10) according to any one of claims 1 to 10; and
a vehicle (40) including a second processor, the second processor being configured to
calculate a safe driving degree of the vehicle (40) by a driver, and
output information related to the safe driving degree which is calculated.

12. The parking lot provision system (1) according to claim 11, wherein the second processor is configured to calculate the safe driving degree of the vehicle (40) by the driver based on at least one of information relative to how the vehicle is driven and/or has been driven by the driver, vehicle speed, abrupt deceleration, abrupt acceleration, abrupt steering, and the operating state of safety devices.

13. A non-transitory storage medium storing a program that is executable by one or more processors and that causes the one or more processors to perform functions comprising:
acquiring information related to a safe driving degree of a driver of a vehicle (40); and
determining, based on the information which is acquired, whether to provide access to a parking lot to the driver.

14. The non-transitory storage medium according to claim 13, wherein the functions further comprise:
calculating a score of the driver based on the safe driving degree; and
providing access to the parking lot when the score which is calculated is equal to or higher than a predetermined value.

15. The non-transitory storage medium according to claim 14, wherein the predetermined value is a value set by an owner of the parking lot.

16. The non-transitory storage medium according to any one of claims 13 to 15, wherein the functions further comprise, in order to provide to the driver access to the parking lot, outputting, onto a map screen, information related to a position of a parking lot to which access is provided.
